Europäisches Patentamt

European Patent Office

Office européen des brevets

(19)

(11) **EP 1 243 958 A2**

(12) **EUROPÄISCHE PATENTANMELDUNG**

(43) Veröffentlichungstag:
**25.09.2002   Patentblatt 2002/39**

(51) Int Cl.⁷: **G02B 21/00**

(21) Anmeldenummer: **02100163.1**

(22) Anmeldetag: **21.02.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **13.03.2001   DE 10111824**

(71) Anmelder: **Leica Microsystems Heidelberg GmbH**
**68165 Mannheim (DE)**

(72) Erfinder:
• **Birk, Holger, Dr.**
  **74909 Meckesheim (DE)**
• **Engelhardt, Johann**
  **76669 Bad Schönborn (DE)**

(74) Vertreter: **Reichert, Werner F., Dr.**
**Leica Microsystems AG,**
**Corporate Patents + Trademarks Department,**
**Ernst-Leitz-Strasse 17-37**
**35578 Wetzlar (DE)**

(54) **Verfahren zum Justieren eines Mikroskops und Mikroskop mit Einrichtung zum Justieren des Lichtstrahls**

(57)     Es ist eine Einrichtung (70) zum Justieren eines Lichtstrahls (1) in einem Mikroskop (15) offenbart, wobei das Mikroskop (15) eine optische Achse (60) definiert. Die Einrichtung (70) umfasst ein Mittel zum Einkoppeln (3) des Lichtstrahls in ein Gehäuse (80) der Einrichtung (70). Das Mittel zum Einkoppeln (3) legt eine Einkoppel-stelle (3a) und einen Einkoppellichtstrahl (9) fest. Mindestens ein erster und ein zweiter Photodetektor (10, 22) sind in jeweils unterschiedlichen Abständen zur Einkoppelstelle (3a) angeordnet. Im Einkoppellichtstrahl (9) ist mindestens ein Umlenkmittel (36) vorgesehen, das den Einkoppellichtstrahl (9) auf mindestens einen der Photodetektoren (10, 22) richtet.

Fig. 2

**Beschreibung**

Die Erfindung betrifft ein Verfahren zum Justieren eines Mikroskops. Im besonderen betrifft die Erfindung ein Verfahren zum Justieren von mindestens einem Abschnitt eines Lichtstrahls in einem Mikroskop, wobei der Abschnitt durch ein justierbares optisches Bauteil und einer Position, an der eine Einrichtung zum Justieren eingebracht ist, bestimmt ist.

Ferner betrifft die Erfindung ein Mikroskop mit einer Einrichtung zum Justieren des Lichtstrahls im Mikroskop. Im besonderen betrifft die Erfindung ein Mikroskop mit einer Beleuchtungsquelle zum Beleuchten einer Probe, einer Mikroskopoptik, wobei die Beleuchtungsquelle und die Mikroskopoptik eine optische Achse des Mikroskops bestimmen.

Die Ausbreitung eines Lichtstrahles lässt sich anhand von vier charakteristischen Parametern hinreichend beschreiben, nämlich durch den räumlichen Abstand (Offset) des Lichtstrahls von der optischen Achse des optischen Systems, charakterisiert durch zwei Koordinaten, die durch Parallelverschiebung des Lichtstrahles zur optischen Achse in einer Schnittebene senkrecht zur optischen Achse hervorgehen, den Winkel unter dem er bzw. eine durch den Lichtstrahl gelegte Gerade nach Parallelverschiebung (Eliminierung des Offsets) die optische Achse schneidet, sowie einen Winkel, der die räumliche Lage der Ebene, die von zwei Geraden, die jeweils durch den Lichtstrahl und die optische Achse verlaufen, aufgespannt wird, bezüglich eines festen Koordinatensystems beschreibt.

In dem U.S. Patent 5,206,766 ist ein Verfahren und eine Vorrichtung offenbart, die zur Ausrichtung einer Laserdiode, die in einem optischen Scanner verwendet wird. Zur genauen Ausrichtung ist vor dem Scanner eine opake Scheibe mit einer Zielmarke montiert. Die genaue Ausrichtung der Laserdiode ist erreicht, wenn der Laserstrahl die Zielmarke trifft.

Das U.S. Patent 5,717,666 offenbart eine Justiervorrichtung für ein optisches Mittel, um den Versatz zwischen der zentralen Achse einer Linse und der optischen Achse eines Laserstrahls zu ermitteln und auszugleichen. Die Vorrichtung offenbart einen ersten und einen zweiten Photodetektor. Der erste Photodetektor ist entlang der zentralen Achse der Linse bewegbar, um somit das Ausmaß des Versatzes zu bestimmen. Mit dem zweiten Photodetektor wird die Verteilung des Laserstrahls bestimmt. Ferner ist ein Strahlteiler vorgesehen, der den Laserstahl auf die beiden Photodetektoren richtet. Ein Mechanismus verstellt die Laserlichtquelle an Hand der von den beiden Photodetektoren erhaltenen Signalen, um die Laserlichtquelle entsprechend zu justieren.

Der vorliegenden Erfindung liegt die Aufgabe zugrunde, ein Verfahren zu schaffen, mit dem auf einfache Weise der Strahlengang in einem optischen System justiert werden kann.

Die Aufgabe wird gelöst durch ein Verfahren, das durch die Schritte des kennzeichnenden Teils des Anspruchs 1 bestimmt ist.

Eine weitere Aufgabe der Erfindung besteht darin, ein Mikroskop zu schaffen, das auf einfache, schnelle und sichere Weise justiert bzw. dessen Justierung überprüft werden kann.

Die Aufgabe wird durch ein Mikroskop mit den Merkmalen des kennzeichnenden Teils des Anspruchs 7 gelöst.

Dies hat den Vorteil, dass insbesondere im optischen Gerätebau die charakteristischen Strahlparameter, zumindest an einer Stelle eines Strahlenganges, im optischen System gemessen werden. Besonders vorteilhaft ist die Verwendung der Einrichtung zum Justieren bei einem Mikroskop. Dabei besitzt das Mikroskop entsprechende Positionen, an denen die Einrichtung zum Justieren angebracht werden kann. An Hand dieser Messung können im optischen System bzw. Mikroskop bestimmte optische Elemente durch Stellelemente in ihrer Lage verändert werden, um dadurch die räumliche Lage des Lichtstrahls im optischen System derart zu verändern, dass der Lichtstrahl in die erforderliche Soll-Position gebracht wird. Die erforderliche Soll-Position des Lichtstrahls deckt sich mit der durch das optische System definierten optischen Achse.

Die erfindungsgemäße Einrichtung kann an jeder Stelle des optischen Systems bzw. Mikroskops angebracht werden. Die Einrichtung kann auf zwei verschiedene Arten am optischen System angebracht werden. Die erste Möglichkeit besteht darin, dass der Lichtstrahl des optischen Systems direkt und ohne Ablenkung in die Einrichtung gelangt. Die Einrichtung wird an einer Einkoppelstelle durch eine entsprechende Befestigung direkt in den Strahlengang des optischen Systems gebracht. Die Einrichtung ist mit einem Mittel zum Einkoppeln versehen, wodurch ein Einkoppellichtstrahl erzeugt wird, der ohne Winkeländerung in die Einrichtung gelangt. Das Mittel zum Einkoppeln kann z.B. eine Linse oder ein Strahlabschwächer (Graufilter) sein. Die zweite Möglichkeit besteht darin, dass der Lichtstrahl des optischen Systems über eine Ablenkung (mit Winkeländerung) in die Einrichtung gelangt, wodurch in der Einrichtung der Einkoppellichtstrahl definiert wird. An der Einkoppelstelle gelangt der Lichtstrahl mittels eines Strahlteilers oder eines herkömmlichen Spiegels in die Einrichtung.

Die Mindestanforderung für die Einrichtung ist, dass mindestens ein erster und ein zweiter Photodetektor in jeweils unterschiedlichen Abständen zur Einkoppelstelle angeordnet sind. Die Photodetektoren sind vorzugsweise als 2-dimensionale, positionsempfindliche Detektoren ausgebildet. In der Einrichtung ist mindestens ein Umlenkmittel vorgesehen, das den Einkoppellichtstrahl auf den ersten Photodetektor richtet. Der das Umlenkmittel passierende Anteil des Einkoppellichtstrahls gelangt auf den zweiten Photodetektor. An oder in der Einrichtung können die Photodetektoren unterschiedlich angebracht werden. Die einzige Bedingung für die Einrichtung, die beim Anbringen der Photodetektoren erfüllt werden muss, ist, dass die Photodetektoren sich in jeweils unterschiedlichen Abständen zu der Einkoppelstelle befinden. In einer weiteren Ausführungsform der Erfindung können zusätzlich zu den Photodetektoren optische Zielmarken vorgesehen sein, die für den Benutzer eine zusätzliche visuelle Kontrolle hinsichtlich der Qualität der Justierung zu Verfügung stellen. Für die Justierung ist es jedoch ausreichend sich ausschließlich auf Photosensoren zu verlassen. Besonders vorteilhaft für die Bestimmung der Position des Lichtstrahls erweisen sich elektrooptische Sensoren, wie z.B. Quadrantendioden oder PSDs (Position Sensitiv Detector). Vorzugsweise werden PSDs verwendet, weil Quadrantendioden nur innerhalb eines Bereiches, der etwa dem Lichtstrahlquerschnitt entspricht eine Positionsbestimmung zulassen. Die Funktionsweise von PSDs ist dem Fachmann bekannt, so dass hierauf nicht näher eingegangen werden muss. Durch Auslesen der Photoströme an den vier Elektroden kann auf den Auftreffort des Lichtstrahles innerhalb des Photosensors geschlossen werden.

Weitere Vorteile und vorteilhafte Ausgestaltungen der Erfindung sind Gegenstand der nachfolgenden Figuren sowie deren Beschreibungsteile.

Es zeigen im Einzelnen:

Fig. 1:   eine schematische Darstellung der Einrichtung zum Justieren in Verbindung mit einem Computer und einem Display;

Fig. 2:   eine schematische Darstellung eines Mikroskops, den dazugehörigen Strahlengang und möglichen Positionen der Einrichtungen zum Justieren am Mikroskop;

Fig. 3:   ein User-Interface mit einer Darstellung des Lichteinkoppelmoduls und den zugehörigen Verstellelementen;

Fig. 4:   ein User-Interface mit einer Darstellung des K-Scanners und den zugehörigen Verstellelementen; und

Fig. 5:   ein User-Interface mit einer Darstellung des Moduls zum Strahlaufweiten und den zugehörigen Verstellelementen.

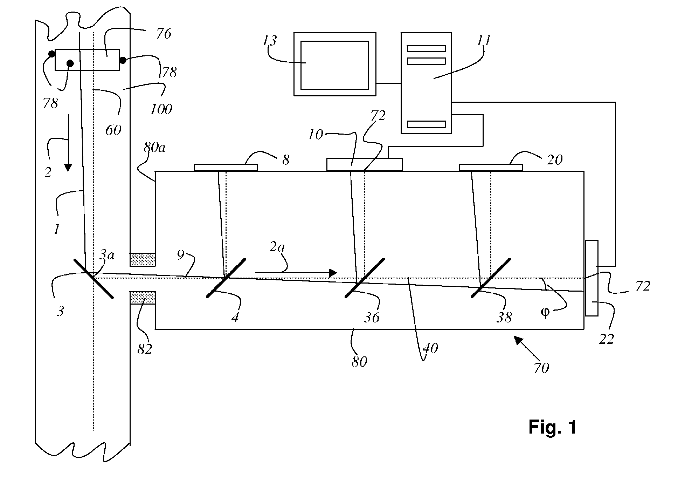

Fig. 1 zeigt eine Ausführungsform einer Einrichtung 70, die sowohl eine elektronische Ermittlung und Auslesung der Positionssignale, als auch eine visuelle Kontrolle erlaubt. Ein Lichtstrahl 1, der sich im optischen System 100 eines Mikroskops 15, in die mit einem Pfeil 2 angedeutete Richtung ausbreitet, wird mit einem Mittel 3 zum Einkoppeln in die Einrichtung 70 reflektiert. Das Mittel 3 zum Einkoppeln kann als herkömmlicher Strahlteiler ausgebildet sein, der permanent in einer durch das optische System 100 des Mikroskops 15 definierten optischen Achse 60 angeordnet ist. Ebenso kann das Mittel 3 zum Einkoppeln als herkömmlicher Spiegel ausgebildet sein, der lediglich zum Ermitteln der Justierung des Lichtstrahls 1 derart in das optische System 100 des Mikroskops 15 einbringbar ist, dass der Lichtstrahl 1 in die Einrichtung 70 eingekoppelt wird. Das Mittel 3 zum Einkoppeln definiert einen Einkoppellichtstrahl 9, der durch in der Einrichtung 70 vorgesehene Strahlteiler 4, 36, 38 auf mindestens zwei Photodetektoren 10 und 22 lenkbar ist. Ein erster Strahlteiler 4 lenkt den Einkoppellichtstrahl 9 auf eine erste visuell beobachtbare Zielmarke 8. Der erste Strahlteiler 4 kann z.B. als einfache Glasplatte ausgeführt sein.

Der Einkoppellichtstrahl 9 definiert eine optische Achse 40 für die geradlinige Strahlausbreitung innerhalb eines Gehäuseteils 80 der Einrichtung 70. Ein zweiter Strahlteiler 36 lenkt den vom ersten Strahlteiler 4 durchgelassenen Lichtstrahl auf einen ersten Photodetektor 10, der z.B. als 2-dimensionaler, positionsempfindlicher Detektor ausgebildet sein kann. Der zweite Strahlteiler 36 ist beispielsweise als beschichteter 50/50-Strahlteiler ausgeführt. Ein dritter Strahlteiler 38, lenkt den vom zweiten Strahlteiler 36 durchgelassenen Lichtstrahl auf eine zweite visuell beobachtbare Zielmarke 20. Der dritte Strahlteiler 38 kann ebenfalls als einfache Glasplatte ausgeführt sein. Der vom dritten Strahlteiler 38 durchgelassene Lichtstrahl gelangt auf einen zweiten Photodetektor 22, der ebenfalls als 2-dimensionaler, positionsempfindlicher Detektor ausgebildet sein kann. Die in Fig. 1 dargestellte spezielle Anordnung von Zielmarken 8, 20 und Photodetektoren 10, 22 ist lediglich eine Auswahl von mehreren Möglichkeiten. Das einzige Erfordernis ist, dass an oder in einem Gehäuseteil 80 mindestens zwei Photodetektoren 10, 22 vorgesehen sind, dass die Photodetektoren 10, 22 in unterschiedlichen Abständen von dem Mittel 3 zum Einkoppeln angeordnet sind, und dass mindestens ein Photodetektor 10 oder 22 von der optischen Achse 40 des Einkoppellichtstrahls 9 im Gehäuseteil 80 beabstandet ist. Auf die erste oder zweite Zielmarke 8, 20 kann verzichtet werden. Die räumliche Lage des Mittels 3 zum Einkoppeln definiert eine Einkoppelstelle 3a.

Die Photodetektoren 10 und 22 besitzen mehrere elektrische Anschlüsse, die mit einem Computer 11 verbunden sind. Der Computer 11 kann z.B. als PC oder als eine integrierte Schaltung ausgebildet sein, die für die Ermittlung der Justierung des optischen Systems 100 die erforderlichen Berechnungen durchführt. Dem Computer 11 ist ein Display 13 zugeordnet (siehe Fig. 1), auf dem z.B. die aktuelle Lage des zu justierenden Lichtstrahls 1 im optischen System 100 des Mikroskops graphisch darstellbar ist. Die ersten, zweiten und dritten Strahlteiler 4, 36 und 38 sowie der zweite Photodetektor 22 sind in der Ausbreitungsrichtung des Einkoppellichtstrahls 9, bzw. in der optischen Achse 40 des Einkoppellichtstrahls 9, angeordnet, wobei die Ausbreitungsrichtung durch einen Pfeil 2a gekennzeichnet ist. Das Gehäuseteil 80 der Einrichtung 70 ist an der Stirnseite 80a über den Flansch 82 mit dem optischen System 100 des Mikroskops 15 verbunden. Die Verbindung dient dazu die Einrichtung 70 zum optischen System 100 des Mikroskops in eine definierte Lage zu bringen. In der hier dargestellten Ausführungsform wird der Einkoppellichtstrahl 9 unter einer Winkeländerung in die Einrichtung 70 geleitet. Es ist ebenso vorstellbar, dass die Einrichtung 70 derart mit dem optischen System des Mikroskops verbunden ist, dass der Einkoppellichtstrahl 9 unabgelenkt in die Einrichtung 70 gelangt.

Innerhalb des Gehäuseteils 80 ist der Einkoppellichtstrahl 9 zur optischen Achse des Einkoppellichtstrahls 40 gegebenenfalls parallel verschoben und/oder räumlich geneigt. Die räumliche Neigung lässt sich mit Hilfe zweier Winkel $\varphi$ und $\theta$ eindeutig beschreiben. Die Berechnung des Abstandes des Lichtstrahls 1 zur optischen Achse 60 im Bereich des Mittels 3 zum Einkoppeln resultiert aus einer einfachen Dreiecksberechnung. Dabei nehmen der Abstand des ideal justierten Lichtstrahls 40 vom Strahlteiler 36 zum ersten Photodetektor 10 und der Abstand des Strahlteilers 36 zum zweiten Photodetektor 22 auf die Berechnung Einfluß. Mit Hilfe des am ersten Photodetektor 10 bestimmten Koordinatenpaars $(x_1, y_1)$ und des am zweiten Photodetektor 22 bestimmten Koordinatenpaars $(x_2, y_2)$ kann die Abweichung des Einkoppellichtstrahls 9 zur optischen Achse 40 des Einkoppellichtstrahls bestimmt werden. Der Winkel $\varphi$ ist der Winkel unter dem der Einkoppellichtstahl 9 bzw. eine durch den Einkoppellichtstrahl 9 gelegte Gerade nach Parallelverschiebung (Eliminierung des Offsets) die optische Achse 40 schneidet. Der Winkel $\varphi$ lässt sich anhand der folgenden Formel berechnen:

$$\varphi = \arctan\left(\frac{\sqrt{(x_2 - x_1)^2 + (y_2 - y_1)^2}}{b - a}\right)$$

wobei a der Abstand vom Strahlteiler 36 zum ersten Photodetektor 10, und b ist der Abstand des Strahlteilers 36 zum zweiten Photodetektor 22.

Der Winkel $\theta$, ebenfalls nach Eliminierung des Offsets, beschreibt die räumliche Lage der Ebene, die von zwei Geraden, die jeweils durch den Einkoppellichtstrahl 9 und die optische Achse 40 verlaufen, aufgespannt wird, bezüglich eines festen Koordinatensystems, und lässt sich wie folgt berechnen:

$$\theta = \arctan\left(\frac{x_1 - x_2}{y_2 - y_1}\right) + 90°, \qquad \text{für } y_2 - y_1 \geq 0$$

$$\theta = \arctan\left(\frac{x_1 - x_2}{y_2 - y_1}\right) + 270°, \qquad \text{für } y_2 - y_1 < 0$$

Der Lichtstrahl 1 im optischen System 100 des Mikroskops 15 passiert mindestens ein optisches Element 76. Dieses optische Element 76 kann derart verstellt werden, dass der Lichtstrahl 1 im optischen System 100 des Mikroskops 15 exakt in der optischen Achse 60 verläuft. Als Folge dieser Verstellung trifft der Einkoppellichtstrahl 9 in der Einrichtung 70 genau auf eine Soll-Position 72. Die Verstellung des optischen Elements 76 kann durch mehrere Stellelemente 78 erfolgen, wodurch der Lichtstrahls 1 in vier voneinander unabhängige räumliche Richtungen, zwei Lateral- und zwei Winkelverstellungen, manipulierbar ist, um dadurch den Lichtstrahl 1 mit der optischen Achse 60 in Deckung zu bringen. Die Stellelemente 78 können von Hand durch den Benutzer verstellt werden, oder alle Stellelemente 78 werden automatisch verstellt. Die Verstellung ist elektromechanisch. Der Computer 11 vergleicht dabei ständig die sich aufgrund der Verstellung der Stellelemente 78 verändernde Ist-Position und gleicht die Verteilung der Stellelemente 78 an, um eine schelle und effiziente Erreichung der Soll-Position zu erzielen.

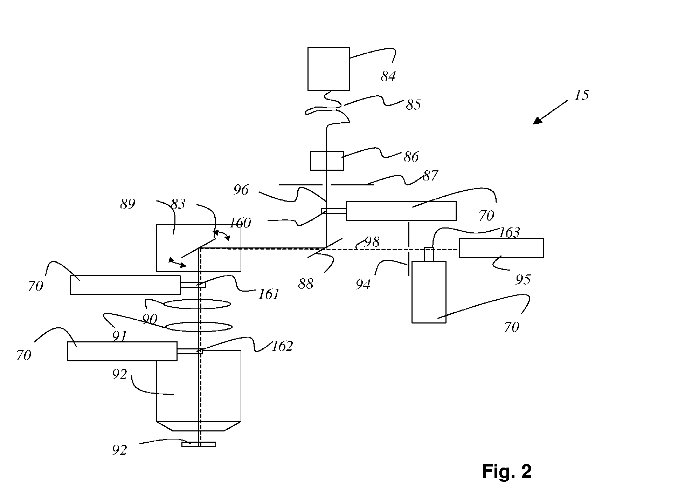

Fig. 2 zeigt schematisch den Aufbau eines Mikroskops 15. In dem hier dargestellten Ausführungsbeispiel wird der schematische Aufbau eines konfokalen Scanmikroskops beschrieben. Das von einer Beleuchtungsquelle 84 kommende Licht wird mittels einer Faser 85 zu einer Lichteinkoppeloptik 86 geleitet, die einen Beleuchtungslichtstrahl 96 definiert, der in dieser Ausführungsform als durchgezogene Linie dargestellt ist. Der Beleuchtungslichtstrahl 96 gelangt über ein Beleuchtungspinhole 87 zu einem Strahlteiler 88. Der Strahlteiler 88 reflektiert den Beleuchtungslichtstrahl 96 zum einem Scanmodul 89, das einen kardanisch aufgehängten Scanspiegel 83 beinhaltet, der den Beleuchtungslichtstrahl 96 durch eine Scanoptik 90 und eine weitere Optik 91 zu einer Mikroskopoptik 92 lenkt. Durch das Scanmodul 89 und die Mikroskopoptik 92 wird der Beleuchtungslichtstrahl 96 über bzw. durch eine Probe 93 geführt.

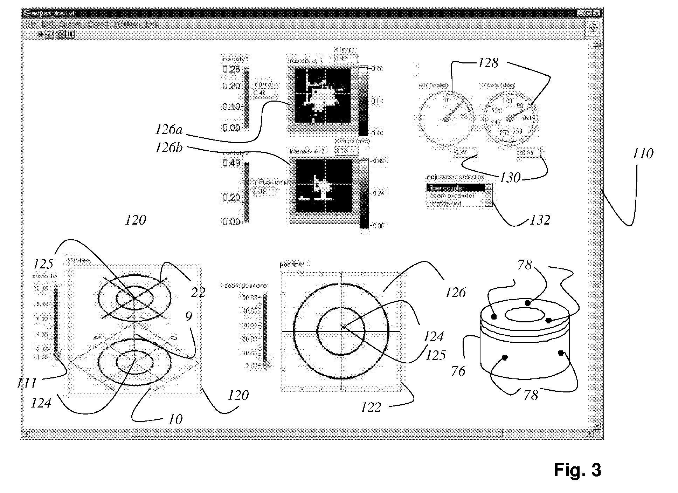

Der Beleuchtungslichtstrahl 96 wird bei nicht transparenten Proben 93 über die Objektoberfläche geführt. Bei biologischen Proben 93 oder transparenten Proben kann der Beleuchtungslichtstrahl 96 auch durch die Probe 93 geführt werden. Dies bedeutet, dass verschiedene Fokusebenen der Probe 93 nacheinander durch den Beleuchtungslichtstrahl 96 abgetastet werden. Die nachträgliche Zusammensetzung ergibt dann ein 3-dimensionales Bild der Probe 93. Der von der Beleuchtungsquelle 84 kommende Beleuchtungslichtstrahl 96 ist als durchgezogene Linie dargestellt. Das von der Probe 93 ausgehende Licht ist ein Detektionslichtstrahl 98, der in Fig. 2 gestrichelt dargestellt ist. Der Detektionslichtstrahl 98 gelangt durch die Mikroskopoptik 92 und über das Scanmodul 89 zum Strahlteiler 88, passiert ein Detektionspinhole 94 und trifft auf einen Detektor 95, der z.B. als Photomultiplier ausgeführt ist. Im Detektor 95 werden elektrische, zur Leistung des von der Probe 93 ausgehenden Detektionslichts, proportionale Detektionssignale erzeugt. In dem in Fig. 2 dargestellten Ausführungsbeispiel sind vier mögliche Positionen für die Einrichtung 70 zum Justieren dargestellt. Eine erste Position 160 befindet sich zwischen dem Beleuchtungspinhole 87 und dem Strahlteiler 88. Die Justierung des Beleuchtungslichtstrahls 96 wird an der Lichteinkoppeloptik 86 durchgeführt (siehe Fig. 3). Eine zweite Position 161 ist zwischen dem Scanmodul 89 und der Scanoptik 90 vorgesehen. Eine dritte Position 162 befindet sich zwischen einer Optik 91 und der Mikroskopoptik 92. Eine vierte Position 163 könnte zwischen dem Detektionspinhole 94 und dem Detektor 95 vorgesehen sein.

Fig. 3 zeigt eine Ausführungsform eines User-Interfaces 110 zur visuellen Darstellung der Abweichung der Ist-Position des Einkoppellichtstrahls 9 von der Soll-Position 72 auf dem Display 13. Die Ist-Position ist bezüglich der optischen Achse 40 eindeutig charakterisiert durch Parallelversatz zur optischen Achse 40 und/oder Neigung zur optischen Achse 40. Das User-Interface 110 ist aus mehreren Abschnitten aufgebaut. In einer ersten Ansicht 120 wird eine räumliche Ansicht der Auftrefforte 124 und 125 des Einkoppellichtstrahls 9 auf die beiden Photodetektoren 10 und 22 dargestellt. Neben dieser ersten Ansicht 120 kann eine Zoomskala 111 vorgesehen sein, die eine Einstellung des Zooms in der ersten Ansicht 120 erlaubt. Neben der ersten Ansicht 120 ist eine Projektionsdarstellung 122 vorgesehen. Die Auftrefforte 124 und 125 des Einkoppellichtstrahls 9 auf die Photodetektoren 10 und 22 auf einer schematisch dargestellten Photodetektoroberfläche 126 eingetragen. Des weiteren werden die Winkel $\varphi$ und $\theta$ sowohl in graphischer Winkelangabe 128 als auch in numerischer Winkelangabe 130 auf dem User-Interface 110 angezeigt. Ebenso werden dem Benutzer in einer weiteren Ansicht 126a die Intensität und der Auftreffort des Lichtstrahls auf den ersten Photodetektor 10 in Realtime dargestellt. Der Benutzer kann hier zusätzlich die Veränderung der Position des Lichtstrahls aufgrund der Verstellung der Stellelemente 78 verfolgen. Unterhalb der Ansicht 126a ist eine weitere Ansicht 126b vorgesehen, die die Intensität und die Position des Lichtstrahls auf dem zweiten Detektor 22 wiedergibt. In den beiden Ansichten 126a und 126b wird die Position des Lichtstrahls durch einen Lichtpunkt dargestellt. Die Intensität kann durch Grauabstufungen oder durch geeignet gewählte Farbabstufungen erreicht werden.

Unterhalb der graphischen und numerischen Winkelangabe 128 und 130 ist ein Auswahlfenster 132 vorgesehen, mit dem das einzustellende optische Element 76 aufgerufen werden kann. In Fig. 3 ist als optisches Element 76 die Lichteinkoppeloptik 86 ausgewählt.

Ferner ist auf dem User-Interface 110 ein Bild des optischen Elements 76 angeordnet, wobei dem Benutzer angezeigt wird, welche Stellelemente 78 betätigt werden müssen, um den Lichtstrahl 1 in die Soll-Position 72 zu bringen. Alle Darstellungen und Angaben erfolgen online in Realtime.

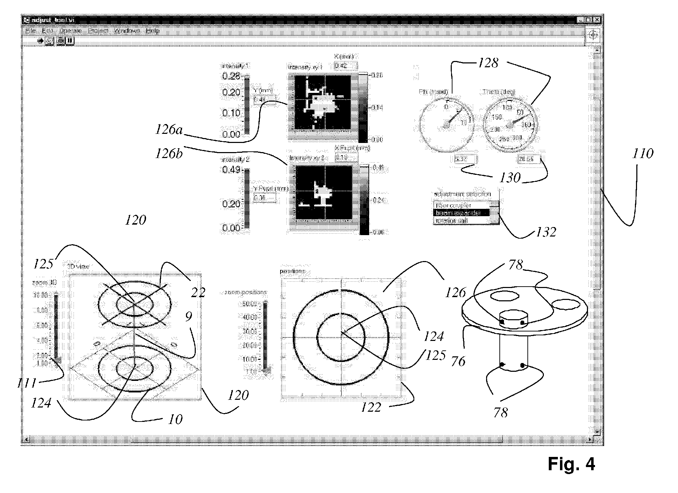

Fig. 4 zeigt die Ausführungsform des User-Interfaces 110, bei dem die Darstellung der ersten Ansicht 120, der Projektionsdarstellung 122, der graphischen und numerischen Winkelangabe 128 und 130, der Ansichten 126a und 126b und des Auswahlfensters 132 mit dem aus Fig. 3 identisch sind. In der in Fig. 4 dargestellten Ausführungsform des User-Interfaces 110 ist ein anderes optisches Element 76 dargestellt. Auf dem optischen Element 76 sind ebenfalls mehrere Stellelemente 78 dargestellt. Dem Benutzer wird angezeigt, welches der Stellelemente zu verstellen ist, um den Lichtstrahl 1 in die Soll-Position 72 zu bringen. Die Kennzeichnung der zu verstellenden optischen Elemente kann durch eine farbliche Kennzeichnung erfolgen. Im Ausführungsbeispiel der Fig. 4 ist ein K-Scanner dargestellt.

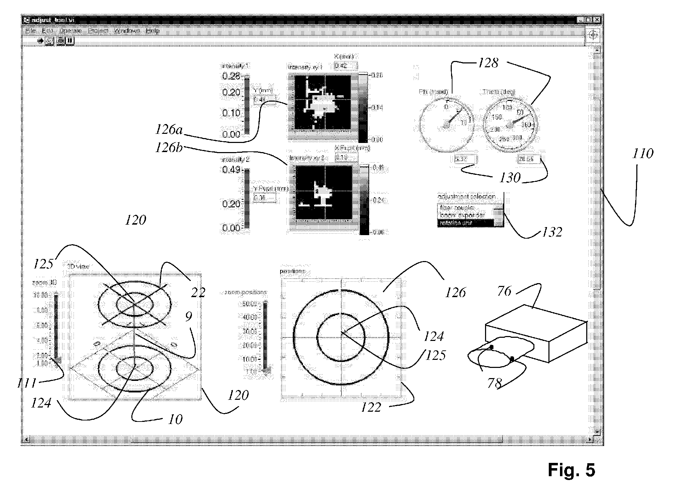

In der in Fig. 5 dargestellten Ausführungsform des User-Interfaces 110 ist ein weiteres optisches Element 76 dargestellt. Auf dem optischen Element 76 sind ebenfalls mehrere Stellelemente 78 dargestellt. Dem Benutzer wird angezeigt, welches der Stellelemente zu verstellen ist, um den Lichtstrahl 1 in die Soll-Position 72 zu bringen. Die Kennzeichnung der zu verstellenden Stellelemente erfolgt ebenfalls durch eine farbliche Markierung. Dabei können die zu betätigenden Stellelemente z.B. mit Rot gekennzeichnet sein. Im Ausführungsbeispiel der Fig. 5 ist ein Modul zum Strahlaufweiten dargestellt. Ferner sind alle anderen auf dem User-Interface 110 dargestellten Ansichten und Darstellungen mit denen aus Fig. 3 und Fig. 4 identisch. Folglich braucht hier auch nicht weiter darauf eingegangen werden.

**Patentansprüche**

1. Verfahren zum Justieren von mindestens einem Abschnitt eines Lichtstrahls (1) in einem Mikroskop (15), wobei der Abschnitt durch ein justierbares optisches Bauteil (76) und einer Position, an der eine Einrichtung (70) zum Justieren eingebracht ist, definiert ist, **gekennzeichnet durch** die folgenden Schritte:

   - Einkoppeln des Lichtstrahls (1) des Mikroskops (15) an der Position in die Einrichtung (70) zum Justieren des Lichtstrahls (1) und dabei Erzeugen eines Einkoppellichtstrahls (9) in der Einrichtung (70);

   - Lenken des Einkoppellichtstahls (9) auf mindestens zwei Photodetektoren (10, 22), wobei die Photodetektoren (10, 22) jeweils unterschiedlich von der Position beabstandet sind;

   - Ermitteln der Abweichung des Einkoppellichtstahls (9) von der Soll-Position (72) aus den elektrischen Signalen der Photodetektoren (10, 22) und

   - Verstellen des optischen Bauteils (76) über mindestens ein Stellelement (78), um den Einkoppellichtstahl (9) in eine Soll-Position (72) zu bringen.

2. Verfahren nach Anspruch 1, **dadurch gekennzeichnet, dass** das Verstellen des optischen Bauteils (76) automatisch erfolgt, wobei das optische Bauteil (76) und die Stellelemente (78) auf einem Display (13) dargestellt werden und immer dieses Stellelement (78) hervorgehoben wird, welches gerade automatisch verändert wird, um somit den Einkoppellichtstrahl (9) in die Soll-Position (72) zu bringen.

3. Verfahren nach Anspruch 1, **dadurch gekennzeichnet, dass** zur visuellen Kontrolle der Soll-Position (72) des Einkoppellichtstahls (9) auf mindestens eine optische Zielmarke (8, 20) lenkbar ist.

4. Verfahren nach Anspruch 1 **gekennzeichnet durch** die weiteren Schritte:

   - Ermitteln der räumlichen Lage des Lichtstrahls (1) in einem Abschnitt des Mikroskops (15), indem der Einkoppellichtstrahl (9) auf die zwei Photodetektoren (10, 22) gelenkt wird, die als 2-dimensionale positionsempfindliche Sensoren ausgestaltet sind, und

   - Errechnen aus den Auftrefforten (124, 125) des Einkoppellichtstrahls (9) auf die positionsempfindlichen Sensoren die Lage des Lichtstrahls (1) im Abschnitt des Mikroskops (15) relativ zur definierten optischen Achse (60).

5. Verfahren nach Anspruch 4 **gekennzeichnet durch** die weiteren Schritte:

   - Darstellen der Abweichung des Auftrefforts (124, 125) des Lichtstrahls (1) von der Soll-Position (72) in graphischer oder numerischer Form (128, 130) auf dem über einen Computer (11) mit der Einrichtung zum Justieren (70) verbundenen Display (13) und

   - Darstellen der Veränderung der Auftrefforte (124, 125) des Lichtstrahls (1) beim Verstellen der Stellelemente (78).

6. Verfahren nach Anspruch 1, **dadurch gekennzeichnet, dass** die Abweichung der Auftrefforte (124, 125) von der Soll-Position (72) des Einkoppellichtstrahls (9) auf den ersten Photodetektor (10) durch ein Koordinatenpaar ($x_1$, $y_1$) und auf den zweiten Photodetektor (22) durch ein Koordinatenpaar ($x_2$, $y_2$) bestimmt ist.

7. Mikroskop (15) mit einer Beleuchtungsquelle (84) zum Beleuchten einer Probe (93), einer Mikroskopoptik (92), wobei die Beleuchtungsquelle und die Mikroskopoptik (92) eine optische Achse (60) des Mikroskops (15) bestimmen, **dadurch gekennzeichnet, dass** mindestens ein einstellbares optisches Element (76) in der optischen Achse (60) des Mikroskops (15) vorgesehen ist und dass mindestens eine Einrichtung (70) zum Justieren in einer dem optischen Element (76) nachgeschalteten Position (160, 161, 162, 163) des Strahlengangs (60) des Mikroskops (15) angebracht ist.

8. Mikroskop nach Anspruch 7, **dadurch gekennzeichnet, dass** die Einrichtung (70) zum Justieren eines Lichtstrahls ein Mittel zum Einkoppeln (3) des Lichtstrahls in die Einrichtung (70) aufweist, dass das Mittel zum Einkoppeln (3) eine Einkoppelstelle (3a) und einen Einkoppellichtstrahl (9) definiert, dass die Einrichtung (70) mindestens einen ersten und einen zweiten Photodetektor (10, 22) in jeweils unterschiedlichen Abständen zur Einkoppelstelle (3a) umfasst, und dass die Einrichtung (70) im Einkoppellichtstrahl (9) mindestens einen Strahlteiler (36) besitzt, der den Einkoppellichtstrahl (9) auf mindestens einen der Photodetektoren (10, 22) richtet.

9.  Mikroskop nach Anspruch 7, **dadurch gekennzeichnet, dass** mindestens eine optische Zielmarke (8, 20) zur visuellen Kontrolle eine jeweiligen Auftrefforts (124, 125) auf dem ersten und zweiten Photodetektor (10, 22) des Einkoppellichtstahls (9) vorgesehen ist, wobei die optische Zielmarke (8, 20) ebenfalls von der Einkoppelstelle (3a) beabstandet angeordnet ist.

10.  Mikroskop nach Anspruch 8, **dadurch gekennzeichnet, dass** die Photodetektoren (10, 22) als 2-dimensionale, positionsempfindliche Detektoren ausgebildet sind.

11.  Mikroskop nach Anspruch 8, **dadurch gekennzeichnet, dass** die Abweichung des Auftrefforts (124, 125) von der Soll-Position (72) des Einkoppellichtstrahls (9) auf dem ersten Photodetektor (10) durch ein erstes Koordinatenpaar $(x_1, y_1)$ und auf dem zweiten Photodetektor (22) durch ein zweites Koordinatenpaar $(x_2, y_2)$ bestimmt ist.

12.  Mikroskop nach einem der Ansprüche 7 bis 11, **dadurch gekennzeichnet, dass** das Mikroskop ein konfokales Scanmikroskop ist.

13.  Mikroskop nach Anspruch 12, **dadurch gekennzeichnet, dass** eine Lichteinkoppeloptik (86) vorgesehen ist, die das von der Beleuchtungsquelle (84) kommende Licht in den Strahlengang (60) des Scanmikroskops einkoppelt, ein Beleuchtungspinhole (87) der Lichteinkoppeloptik (86) nachgeschaltet ist, ein Strahlteiler (88), der den Beleuchtungslichtstrahl (96) auf ein Scanmodul (89) richtet, eine Scanoptik (90), eine Optik (91) und eine Mikroskopoptik (92), die den Beleuchtungslichtstrahl auf eine Probe (93) abbildet und ein Detektor (95) mit einem vorgeschalteten Detektionspinhole (94), der den Detektionslichtstrahl (98) dedektiert.

**Fig. 1**

Fig. 2

**Fig. 3**

Fig. 4

Fig. 5